# EUROPEAN PATENT APPLICATION

(11) **EP 2 835 681 A1**
(43) Date of publication of application: **11.02.2015**
(21) Application number: 13773038.8
(22) Date of filing: 03.04.2013
(51) Int. Cl.: G02C 7/02, B32B 27/40, C09D 175/04, G02B 1/10

(54) **SPECTACLE LENS AND PROCESSS FOR PRODUCING SAME**

(30) Priority: 03.04.2012 JP 2012084569
(71) Applicant: HOYA LENS MANUFACTURING PHILIPPINES INC., Cavite (PH)
(72) Inventor: OHSHITA, Shugo, Shinjuku-ku, Tokyo 161-8525 (JP); IMAI, Yuko, Shinjuku-ku, Tokyo 161-8525 (JP)
(74) Representative: Beckmann, Claus
(86) International application number: PCT/JP2013/060235
(87) International publication number: WO 2013/151101

(57) **Abstract**

An aspect of the present invention relates to a method of manufacturing an eyeglass lens comprising a coating layer on a lens substrate, which comprises forming the coating layer by coating a coating liquid by an ink-jet method on the lens substrate, with the coating liquid which is a water-based coating liquid comprising a solvent having a boiling point of equal to or higher than 200°C but lower than 290°C, a water-dispersible polyurethane resin, and a surfactant.

## Description

### Cross-reference to related applications

This application claims the benefit of priority to Japanese Patent Application No. 2012-084569 filed on April 3, 2012, which is expressly incorporated herein by reference in its entirety.

### Technical field

The present invention relates to an eyeglass lens and a method of manufacturing the same.

### Background Art

A primer layer is sometimes provided on an eyeglass lens to achieve good adhesion between a lens substrate and a functional layer or between two functional layers. For example, in some cases, a hard coat layer is formed on a plastic lens substrate and an antireflective layer is formed on the hard coat layer. To achieve good adhesion between the plastic lens substrate and the hard coat layer, a primer layer is generally provided between the plastic lens substrate and the hard coat layer.

The use of a primer composition containing water-dispersible polyurethane resin and a diene synthetic rubber emulsion, acrylic emulsion, or a combination thereof is known for forming a primer layer (for example, see Japanese Unexamined Patent Publication (KOKAI) No. 2010-150309, which is expressly incorporated herein by reference in its entirety).

In Japanese Unexamined Patent Publication (KOKAI) No. 2010-150309, the primer composition is coated on a plastic lens substrate by the immersion method, spray method, spin method, flow coating method, curtain coating method, or the like.

In Japanese Unexamined Patent Publication (KOKAI) No. 2010-150309, the film thickness of the primer layer sometimes becomes uneven and an interference fringe is sometimes produced because the primer composition is coated on the plastic lens substrate by the immersion method or the like. Although the spin method tends to achieve more uniform film thickness than the immersion method, the surplus primer composition is removed by centrifugal force, wasting considerable material.

Accordingly, the present inventors examined how to coat a primer composition on a lens substrate by the ink-jet method, affording good control of the thickness of the primer layer and wasting little primer composition. As a result, they found that when a conventional primer composition was applied to a lens substrate by the ink-jet method, it was possible to achieve a thin film, but cracking of the primer layer sometimes occurred. When a change was made to a solvent with a relatively high boiling point to inhibit cracking, they found that interference fringes and sagging (a phenomenon that renders the coating uneven) sometimes resulted.

### Summary of the invention

An aspect of the present invention provides for a method of manufacturing an eyeglass lens permitting the formation on a lens substrate of a coating layer in which the generation of cracks or interference fringes and/or sagging are inhibited (desirably, a coating layer in which the generation of cracks and both interference fringes and sagging are inhibited) by coating by the ink-jet method.

An aspect of the present invention relates to a method of manufacturing an eyeglass lens comprising a coating layer on a lens substrate, which comprises forming the coating layer by coating a coating liquid by an ink-jet method on the lens substrate, with the coating liquid which is a water-based coating liquid comprising a solvent having a boiling point of equal to or higher than 200°C but lower than 290°C, a water-dispersible polyurethane resin, and a surfactant.

The above coating liquid comprises a water-dispersible polyurethane resin, which is a component for forming the primer layer. The surfactant contained together can adjust the surface tension of the coating liquid.

By means of a solvent having a boiling point of equal to or higher than 200°C but lower than 290°C, it is possible to prevent the generation of cracks in the coating layer (coating) that is formed on the object being coated, specifically, on the lens substrate. With solvents with boiling points of lower than 200°C, cracks tend to be generated in the coating layer, and with those with boiling points of equal to or higher than 290°C, cracks, interference fringes, and/or sagging (a phenomenon that renders the coating uneven) tend to occur.

Since it is possible to control the quantity of the coating liquid by the ink-jet method, a uniform primer layer can be formed on the lens substrate. More specifically, in the course of discharging the coating liquid through a nozzle by the ink-jet method, by incorporating a solvent with a boiling point of equal to or higher than 200°C but lower than 290°C in the coating liquid, drying can become slower than it would be in the case where a solvent with a boiling point of lower than 200°C was employed. As a result, the nozzle tends not to clog. Accordingly, discharge occurs stably, it is possible to uniformly apply the primer layer, and it is possible to inhibit the generation of interference fringes. Since a solvent with a boiling point of equal to or higher than 200°C but lower than 290°C is incorporated, cracks tend not to occur in the coating that is formed.

In an embodiment, the coating liquid further comprises ethylene glycol.

Ethylene glycol has a boiling point of about 198°C, which is lower than the boiling point of the above solvent (equal to or higher than 200°C but lower than 290°C).

Thus, the drying time can be shortened when drying the coating, more effectively inhibiting interference fringes and/or sagging.

In an embodiment, the coating liquid comprises ethylene glycol in a quantity of less than twice the mass of the solvent having a boiling point of equal to or higher than 200°C but lower than 290°C.

The larger the quantity of ethylene glycol in the coating liquid, the shorter the drying time can be made. This is desirable from the perspective of inhibiting the generation of interference fringes and/or sagging. Additionally, rapid drying can sometimes cause the generation of cracks. Accordingly, from the perspectives of more effectively both inhibiting the generation of interference fringes and sagging as well as inhibiting the generation of cracking, the mass of ethylene glycol is desirably kept to less than twice the mass of the above solvent.

In an embodiment, the coating liquid comprises ethylene glycol in a quantity of equal to or more than 0.5-fold the mass of the solvent having a boiling point of equal to or higher than 200°C but lower than 290°C.

As set forth above, incorporating ethylene glycol into the coating liquid makes it possible to shorten the drying time of the coating, and is thus desirable to inhibit interference fringes and/or sagging. From the perspective of more effectively inhibiting the generation of interference fringes and/or sagging, it is desirable for the mass of the ethylene glycol to be equal to or more than 0.5-fold the mass of the solvent.

In an embodiment, the coating liquid comprises the solvent having a boiling point of equal to or higher than 200°C but lower than 290°C in a concentration of equal to or more than 8 mass% but equal to or less than 25 mass% relative to the total quantity of the coating liquid.

When the concentration of the solvent having a boiling point of equal to or higher than 200°C but lower than 290°C in the coating liquid is kept to equal to or less than 25 mass%, it is possible to shorten to a certain degree the drying time of the coating that is formed using the coating liquid. Accordingly, the generation of interference fringes and/or sagging in the coating can be more effectively inhibited.

When the above concentration is equal to or more than 8 mass%, the generation of cracks in the coating can be more effectively inhibited.

A further aspect of the present invention relates to an eyeglass lens obtained by the above manufacturing method.

A further aspect of the present invention relates to a coating liquid comprising a solvent having a boiling point of equal to or higher than 200°C but lower than 290°C, a water-dispersible polyurethane resin, and a surfactant.

In an embodiment, the above coating liquid further comprises ethylene glycol.

In an embodiment, the mass of the ethylene glycol in the coating liquid is less than twice the mass of the solvent with a boiling point of equal to or higher than 200°C but lower than 290°C.

In an embodiment, the mass of the ethylene glycol in the coating liquid is equal to or more than 0.5-fold the mass of the solvent having a boiling point of equal to or higher than 200°C but lower than 290°C.

In an embodiment, the concentration of the solvent having a boiling point of equal to or higher than 200°C but lower than 290°C in the coating liquid is equal to or more than 8 mass% but equal to or less than 25 mass%.

A further aspect of the present invention relates to a method of forming a primer layer, comprising coating the above coating liquid on a lens substrate by the ink-jet method. Brief description of drawings

[Figure 1] Fig. 1 is a sectional view of major portions of an eyeglass lens relating to an implementation mode of the present invention.
[Fig. 2] Fig. 2 is a schematic view of an ink-jet coating device.

### Mode for carrying out the invention

An aspect of the present invention relates to:
a method of manufacturing an eyeglass lens comprising a coating layer on a lens substrate, which comprises forming the coating layer by coating a coating liquid by an ink-jet method on the lens substrate, with the coating liquid which is a water-based coating liquid comprising a solvent having a boiling point of equal to or higher than 200°C but lower than 290°C, a water-dispersible polyurethane resin, and a surfactant.

A further aspect of the present invention relates to an eyeglass lens obtained by the above manufacturing method.

An implementation method of the present invention will be described based on the drawings.

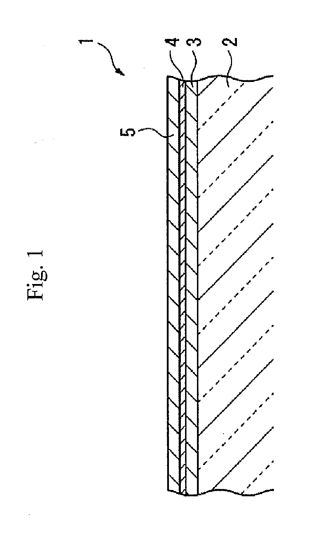

Fig. 1 shows a sectional view of the major portions of an eyeglass lens 1 relating to an implementation method of the present invention. Eyeglass lens 1 applied to the present implementation method can be, by way of example, a single-focus lens or a progressive power lens. The primer layer is generally formed on a finished lens that has been processed in accordance with the wearer's prescription.

In Fig. 1, eyeglass lens 1 comprises, on the surface of lens substrate 2, a primer layer 3, a hard coat layer 4 provided on the surface of primer layer 3, and an antireflective layer 5 provided on the surface of hard coat layer 4.

Lens substrate 2 is not specifically limited. A material that is commonly employed as a lens substrate in eyeglass lenses, specifically, one that is comprised of plastic, inorganic glass, or the like, can be employed. The material of the plastic lens substrate is not specifically limited. Styrene resins including (meth)acrylic resins, polycarbonate resins, allyl resins, diethylene glycol bisallyl carbonate resins (CR-39) and other allyl carbonate resins, vinyl resins, polyester resins, polyether resins, urethane resins obtained by reacting an isocyanate compound with a hydroxyl compound such as diethylene glycol, thiourethane compounds obtained by reacting an isocyanate compound with a polythiol compound, and resins obtained by curing a polymerizable compound containing a (thio)epoxy compound having one or more intramolecular disulfide bonds, and the like are examples. Examples are a thioepoxy plastic lens substrate 2 with a refractive index of equal to or higher than 1.70, an ethylene carbonate plastic lens substrate 2 with a refractive index of equal to or lower than 1.59, and a thiourethane plastic lens substrate 2 with a refractive index of equal to or higher than 1.59.

Primer layer 3 is provided to achieve good adhesion between hard coat layer 4 and plastic lens substrate 2.

The coating layer for forming primer layer 3 is a water-based coating liquid. In the present invention "based" means "containing." That is, the above coating liquid contains water (component A) as a constituent component. Pure water is desirably employed as component A.

In addition to water, the above water-based coating liquid contains a solvent with a boiling point of equal to or higher than 200°C but lower than 290°C, a water-dispersible polyurethane resin, and a surfactant. As set forth above, it also desirably contains ethylene glycol. Accordingly, the water-based coating liquid is desirably a primer composition containing water (component A), ethylene glycol (component B), a solvent with a boiling point of equal to or higher than 200°C but lower than 290°C (component C), a water-dispersible polyurethane resin (component D), and a surfactant (component E).

In this context, the composition of the coating liquid is desirably, relative to the total quantity of the coating liquid, equal to or more than 0 mass% (preferably equal to or more than 5 mass%) but equal to or less than 20 mass% (preferably equal to or less than 10 mass%) of ethylene glycol (component B); equal to or more than 5 mass% (preferably equal to or more than 8 mass%) but equal to or less than 25 mass% (preferably equal to or less than 20 mass%, and more preferably, equal to or less than 10 mass%) of solvent having a boiling point of equal to or higher than 200°C but lower than 290°C (component C); equal to or more than 5 mass% but equal to or less than 30 mass% (preferably equal to or less than 19 mass%) of water-dispersible polyurethane resin (component D); and equal to or more than 0.05 mass% (preferably equal to or more than 0.5 mass%) but equal to or less than 1.0 mass% (preferably equal to or less than 1.0 mass%) of surfactant (component E). The water (component A) is the remainder. For example, it is equal to or more than 50 mass% but equal to or less than 70 mass%, and can be increased or decreased in relation with the surfactant (component E).

The mass of ethylene glycol (component B), as set forth above, is desirably equal to or more than 0.5-fold but less than twice the mass of the solvent (component C) (0.5 ≤ (B/C) < 2.0).

In a primer composition not containing ethylene glycol (component B), that is, a primer composition containing water (component A), a solvent with a boiling point of equal to or higher than 200°C but lower than 290°C (component C), a water-dispersible polyurethane resin (component D), and a surfactant (component E), the solvent with a boiling point of equal to or higher than 200°C but lower than 290°C (component C) desirably constitutes equal to or more than 8 mass% but equal to or less than 25 mass% of the total primer composition.

By contrast, in an embodiment containing ethylene glycol, the solvent with a boiling point of equal to or higher than 200°C but lower than 290°C (component C) desirably makes up equal to or more than 5 mass% but equal to or less than 20 mass% (preferably equal to or less than 10 mass%).

Ethylene glycol (component B) can be used to adjust the drying time in the course of primer layer 3 transitioning from a liquid film to a dry film. The boiling point of ethylene glycol (b.p.: boiling point) is 198°C.

In an embodiment of the present invention, the use of a solvent (component C) having a boiling point of equal to or higher than 200°C but lower than 290°C makes it possible to inhibit the generation of cracks in primer layer 3. With solvents having boiling points of less than 200°C, the coating shrinks rapidly due to rapid drying. As a result, cracks tend to be generated in primer layer 3. When the boiling point exceeds 290°C, drying slows down. Not only do interference fringes tend to be generated, but uneven drying tends to cause local film shrinkage and cracking tends to occur.

Examples of solvents with boiling points of equal to or higher than 200°C but lower than 290°C (component C) are N-methyl pyrrolidone (NMP), with a boiling point of 202°C; 2-pyrrolidone (2PY), with a boiling point of 250°C; and triethylene glycol (TriEG), with a boiling point of 288°C. So long as the boiling point is equal to or higher than 200°C but lower than 290°C, high-boiling-point solvents other than the materials given above can also be employed.

By way of example, the Super Flex series made by Dai-ichi Kogyo Seiyaku Co., Ltd. ("Super Flex" is a registered trademark) - Super Flex 170, Super Flex 410, Super Flex 460, and the like - can be employed as the water-dispersible polyurethane resin (component D). The use of a water-dispersible polyurethane resin makes it possible to obtain a tough primer layer 3 with good transparence, high hardness, water repellence, and durability.

The surfactant (component E) can be used to adjust the surface tension of the primer composition. To coat the primer composition on a plastic lens substrate 2 by the ink-jet method, the surface tension of the primer composition is desirably equal to or more than 20 mN/m but equal to or less than 35 mN/m. Known surfactants capable of functioning as so-called leveling agents or surface tension-adjusting agents can be employed as the surfactant. Examples of desirable surfactants are silicon-based surfactants such as silicone-based surfactants. Fluorine-based surfactants and hydrocarbon-based surfactants can also be employed.

Hard coat layer 4 can be formed so as to contain, by way of example, melamine resin, silicon resin, urethane resin, acrylic resin, and the like.

Antireflective layer 5 is normally a multi-layered film in which a low-refractive-index layer and a high-refractive index layer are sequentially laminated. Examples of the materials in antireflective layer 5 are SiO₂, SiO, ZrO₂, TiO₂, TiO, Ti₂O₃, Ti₂O₅, Al₂O₃, TaO₂, Ta₂O₅, NbO, Nb₂O₃, NbO₂, Nb₂O₅, CeO₂, MgO, Y₂O₃, SnO₂, MgF₂, and WO₃.

Other functional layers, not shown in the drawing, can be provided in eyeglass lenses. For example, a water-repellent or oil- repellent antifouling layer or a hydrophilic antifouling layer can be formed on the surface of antireflective layer 5.

The method of manufacturing eyeglass lens 1 relating to the present implementation mode will be described next.

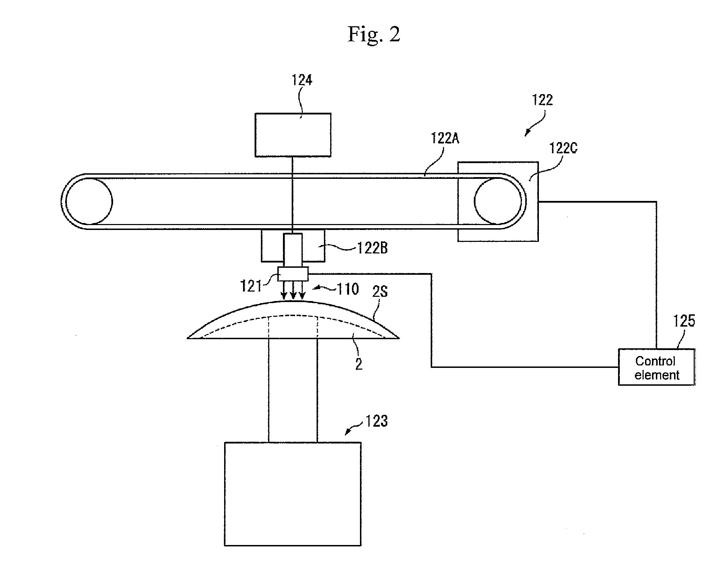

A primer layer 3 is formed with the ink-jet coating device shown in Fig. 2 on a prefabricated lens substrate 2.

In Fig. 2, the ink-jet coating device is equipped with a head 121 discharging multiple droplets 110 onto the surface 2S of lens substrate 2; a driving member 122 moving head 121 back and forth; a holding member 123 holding eyeglass lens 1; a tank 124 feeding the primer composition constituting primer layer 3 to heads 121; and a control element 125 controlling head 121, driving member 122, holding member 123, and tank 124. A Seiko-Epson PX5500 can be employed as the ink-jet coating device, for example.

Head 121 has a plurality of small opening portions (nozzles), and discharges fine droplets 110 through the opening portions by the ink-jet method. The ink-jet method can be a piezo method, thermal method, or the like. The ink-jet device in the present implementation mode is based on the piezo method.

Driving member 122 is a mechanism similar to the carriage mechanism of known ink-jet printers. It comprises a carriage motor 122C or the like that displaces a carriage 122B by means of a timing belt 122A or the like. Head 121 is mounted on carriage 122B. Carriage 122B further comprises a tank 124.

Holding member 123 holds plastic lens substrate 2. Holding member 123 conveys a conveying member (not shown in the drawing) in a secondary scan direction.

Controlling member 125 comprises a CPU or the like and controls head 121, driving member 122, holding member 123, the conveying member, and tank 124. In the present implementation mode, controlling member 125 controls the driving of head 121, thereby controlling the level of discharge of droplets discharged through the nozzles.

Tank 124 is filled with the primer composition of the constitution set forth above.

The primer composition can be prepared, for example, by mixing the water (component A), ethylene glycol (component B), and solvent with a boiling point of equal to or higher thann 200°C but lower than 290°C (component C), adding the water-dispersible polyurethane resin (component D) that is required primarily to form a film, and then adjusting the surface tension with the surfactant (component E). After stirring the primer composition, a degassing device comprised of a vacuum pump and a desiccator can be used to remove the bubbles in the liquid. Subsequently, tank 124 can be filled with the primer composition.

Using the ink-jet coating device constituted as set forth above, the surface of lens substrate 2 - for example, a thioepoxy plastic lens substrate 2 having a refractive index of equal to or higher than 1.70 - is coated with primer composition in the form of a coating liquid to form a primer layer 3. In this process, the average impact diameter of droplets 110 is, for example, 100 µm. A coating can be applied at a density of 1,440 dpi, for example. The impact positions of droplets 110 in the ink-jet application are desirably in the form of a regular discharge adjacent to the targeted outer layer (the region of surface 2S being coated with the coating liquid). Droplets 110 that have impacted lens substrate 2 mix over time with adjacent droplets due to leveling function, forming a continuous film. In an embodiment, once the coating has been completed, drying can be conducted by calcination at a prescribed temperature, for example, 80°C, for a prescribed period, for example, 0.5 hour, to form a primer layer 3 of uniform 1.0 µm thickness on lens substrate 2.

Next, hard coat layer 4 is formed on the surface of primer layer 3. In an embodiment, the coating liquid for forming hard coat layer 4 is coated on the surface of primer layer 3 by the dipping method. Following coating, lens substrate 2 is air dried for 30 minutes at 80°C and then subjected to calcination for 120 minutes at 120°C.

Next, antireflective layer 5 is formed on the surface of hard coat layer 4. In an embodiment, a plasma treatment is applied to form with a vacuum vapor deposition device (made by Synchron) a multilayer antireflective layer 5 comprised of five layers in the order of, going from the hard coat layer side to the air side, SiO₂, ZrO₂, SiO₂, ZrO₂, and SiO₂.

In the implementation mode set forth above, the primer composition is coated on the surface of the lens substrate. However, the surface that can be coated with the primer composition is not limited to the surface of the lens substrate. For example, the primer composition can be coated on the surface of a hard coat layer that has been formed on the surface of the lens substrate. A primer layer formed in this manner can enhance adhesion between the hard coat layer and a functional layer that is deposited over it.

### Examples

The present invention will be further described below based on Examples. However, the present invention is not limited to the embodiments given in Examples.

### [Example 1]

### Constitution of primer composition:

Sixty mass% pure water (component A), 10 mass% ethylene glycol (component B), solvent (component C) in the form of 10 mass% 2PY with a boiling point of 250°C, 19 mass% of water-dispersible polyurethane resin (component D), and 1.0 mass% of silicon surfactant (component E). A water-dispersible polyurethane resin in the form of Super Flex 170 made by Daiichi Kogyo Seiyaka, K.K. was employed. Silicon surfactant in the form of BYK-348 made by BYK Japan, K.K., was employed.

### Object to be coated:

Thioepoxy plastic lens substrate 2 with a refractive index of 1.70.

### Coating method:

The primer composition constituted as set forth above was coated on plastic lens substrate 2 at a density of 1,440 dpi in the form of droplets with an average impact diameter of 100 µm with the ink-jet coating device shown in Fig. 2. Subsequently, calcination and drying was conducted for 0.5 hour at 80°C, yielding an eyeglass lens 1 having a primer layer 3 of uniform 1.0 µm thickness formed on plastic lens substrate 2.

In the other examples set forth below, the object to be coated and the coating method were identical to those described above.

### [Example 2]

### Constitution of primer composition:

Sixty mass% pure water (component A), 10 mass% ethylene glycol (component B), solvent (component C) in the form of 10 mass% NMP with a boiling point of 202°C, 19 mass% of water-dispersible polyurethane resin (component D), and 1.0 mass% of silicon surfactant (component E).

### [Example 3]

### Constitution of primer composition:

Sixty mass% pure water (component A), 10 mass% ethylene glycol (component B), solvent (component C) in the form of 10 mass% TriEG with a boiling point of 288°C, 19 mass% of water-dispersible polyurethane resin (component D), and 1.0 mass% of silicon surfactant (component E).

### [Example 4]

### Constitution of primer composition:

Fifty-five mass% pure water (component A), 15 mass% ethylene glycol (component B), solvent (component C) in the form of 10 mass% NMP with a boiling point of 202°C, 19 mass% of water-dispersible polyurethane resin (component D), and 1.0 % of silicon surfactant (component E).

### [Example 5]

### Constitution of primer composition:

Fifty-one mass% pure water (component A), 19 mass% ethylene glycol (component B), solvent (component C) in the form of 10 mass% NMP with a boiling point of 202°C, 19 mass% of water-dispersible polyurethane resin (component D), and 1.0 mass% of silicon surfactant (component E).

### [Example 6]

### Constitution of primer composition:

Sixty mass% pure water (component A), 0 mass% ethylene glycol (component B), solvent (component C) in the form of 20 mass% NMP with a boiling point of 202°C, 19 mass% of water-dispersible polyurethane resin (component D), and 1.0 mass% of silicon surfactant (component E).

### [Example 7]

### Constitution of primer composition:

Sixty mass% pure water (component A), 0 mass% ethylene glycol (component B), solvent (component C) in the form of 20 mass% 2PY with a boiling point of 250°C, 19 mass% of water-dispersible polyurethane resin (component D), and 1.0 mass% of silicon surfactant (component E).

### [Example 8]

### Constitution of primer composition:

Sixty mass% pure water (component A), 0 mass% ethylene glycol (component B), solvent (component C) in the form of 20 mass% TriEG with a boiling point of 288°C, 19 mass% of water-dispersible polyurethane resin (component D), and 1.0 mass% of silicon surfactant (component E).

### [Example 9]

### Constitution of primer composition:

Fifty-five mass% pure water (component A), 0 mass% ethylene glycol (component B), solvent (component C) in the form of 25 mass% NMP with a boiling point of 202°C, 19 mass% of water-dispersible polyurethane resin (component D), and 1.0 mass% of silicon surfactant (component E).

### [Example 10]

### Constitution of primer composition:

Fifty-five mass% pure water (component A), 0 mass% ethylene glycol (component B), solvent (component C) in the form of 25 mass% 2PY with a boiling point of 250°C, 19 mass% of water-dispersible polyurethane resin (component D), and 1.0 mass% of silicon surfactant (component E).

### [Example 11]

### Constitution of primer composition:

Fifty-five mass% pure water (component A), 0 mass% ethylene glycol (component B), solvent (component C) in the form of 25 mass% TriEG with a boiling point of 288°C, 19 mass% of water-dispersible polyurethane resin (component D), and 1.0 mass% of silicon surfactant (component E).

### [Example 12]

### Constitution of primer composition:

Seventy-two mass% pure water (component A), 0 mass% ethylene glycol (component B), solvent (component C) in the form of 8 mass% NMP with a boiling point of 202°C, 19 mass% of water-dispersible polyurethane resin (component D), and 1.0 mass% of silicon surfactant (component E).

### [Example 13]

### Constitution of primer composition:

Seventy-two mass% pure water (component A), 0 mass% ethylene glycol (component B), solvent (component C) in the form of 8 mass% 2PY with a boiling point of 250°C, 19 mass% of water-dispersible polyurethane resin (component D), and 1.0 mass% of silicon surfactant (component E).

### [Example 14]

### Constitution of primer composition:

Seventy-two mass% pure water (component A), 0 mass% ethylene glycol (component B), solvent (component C) in the form of 8 mass% TriEG with a boiling point of 288°C, 19 mass% of water-dispersible polyurethane resin (component D), and 1.0 mass% of silicon surfactant (component E).

### [Example 15]

### Constitution of primer composition:

Sixty-five mass% pure water (component A), 5 mass% ethylene glycol (component B), solvent (component C) in the form of 10 mass% NMP with a boiling point of 202°C, 19 mass% of water-dispersible polyurethane resin (component D), and 1.0 mass% of silicon surfactant (component E).

### [Example 16]

### Constitution of primer composition:

Sixty-five mass% pure water (component A), 5 mass% ethylene glycol (component B), solvent (component C) in the form of 10 mass% 2PY with a boiling point of 250°C, 19 mass% of water-dispersible polyurethane resin (component D), and 1.0 mass% of silicon surfactant (component E).

### [Example 17]

### Constitution of primer composition:

Sixty-five mass% pure water (component A), 5 mass% ethylene glycol (component B), solvent (component C) in the form of 10 mass% TriEG with a boiling point of 288°C, 19 mass% of water-dispersible polyurethane resin (component D), and 1.0 mass% of silicon surfactant (component E).

### [Example 18]

### Constitution of primer composition:

Fifty-one mass% pure water (component A), 19 mass% ethylene glycol (component B), solvent (component C) in the form of 10 mass% 2PY with a boiling point of 250°C, 19 mass% of water-dispersible polyurethane resin (component D), and 1.0 mass% of silicon surfactant (component E).

The primer layer 3 (the primer layer 3 formed on the surface of plastic lens 2) in each of Examples 1 to 18 above and in each of Examples 19 to 50 below was evaluated for the three items of "cracking," "interference fringes and sagging," and "whitening." The evaluation was conducted by the following methods using the following standards.

### Cracking:

The presence or absence of cracks in primer layer 3 was determined visually.

In Tables 1 and 2 below, "○" means a determination of no visible cracks, and "X" means a determination of cracks.

### Interference fringes and sagging:

The surface of primer layer 3 was observed under a three-wavelength fluorescent lamp (made by Panasonic) in a dark box and the state of reflection was visually determined.

In Tables 1 and 2 below, "○" means a determination of almost no visible interference fringe or sagging, and that the product was equivalent to the level of current products. "X" means that an interference fringe was prominent and that the external appearance was clearly defective. Whitening:

The present or absence of whitening of primer layer 3 was visually determined. In Tables 1 and 2, "○" means a determination of no visible whitening and "X" means a determination of visible whitening.

Each of Examples 1 to 18 provided a good result of "o" for "cracking," "interference fringes and sagging," and "whitening."

Table 1 gives the constitution and evaluation results of each of the primer compositions of Examples 1 to 18. In Table 1, the "DPM" of component C' indicates dipropylene glycol methyl ether with a boiling point (b.p.) of 190°C, and "Gly" indicates glycerol with a boiling point (b.p.) of 290°C.

**[Table 1]**

| | Component | Component | Component | | | | | Component | Component | Evaluation | | |
|---|---|---|---|---|---|---|---|---|---|---|---|---|
| | **A** | **B** | **C'** | **C** | | | **C'** | **D** | **E** | | | |
| | Pure water | **EG (b.p 198°C)** | **DPM (b.p 190°C)** | **NMP (b.p 202°C)** | **2PY (b.p 250°C)** | **TriEG (b.p 288°C)** | **Gly (b.p 290°C)** | Polyurethane | Surfactant | Cracking | Interference fringes and sagging | Whitening |
| Example 1 | **60** | **10** | **0** | **0** | **10** | **0** | **0** | **19** | 1 | ○ | ○ | ○ |
| Example 2 | **60** | **10** | **0** | **10** | **0** | **0** | **0** | **19** | 1 | ○ | ○ | ○ |
| Example 3 | **60** | **10** | **0** | **0** | **0** | **10** | **0** | **19** | 1 | ○ | ○ | ○ |
| Example 4 | **60** | **15** | **0** | **10** | **0** | **0** | **0** | **19** | 1 | ○ | ○ | ○ |
| Example 5 | **60** | **19** | **0** | **10** | **0** | **0** | **0** | **19** | 1 | ○ | ○ | ○ |
| Example 6 | **60** | **0** | **0** | **20** | **0** | **0** | **0** | **19** | 1 | ○ | ○ | ○ |
| Example 7 | **60** | **0** | **0** | **0** | **20** | **0** | **0** | **19** | 1 | ○ | ○ | ○ |
| Example 8 | **60** | **0** | **0** | **0** | **0** | **20** | **0** | **19** | 1 | ○ | ○ | ○ |
| Example 9 | **55** | **0** | **0** | **25** | **0** | **0** | **0** | **19** | 1 | ○ | ○ | ○ |
| Example 10 | **55** | **0** | **0** | **0** | **25** | **0** | **0** | **19** | 1 | ○ | ○ | ○ |
| Example 11 | **55** | **0** | **0** | **0** | **0** | **25** | **0** | **19** | 1 | ○ | ○ | ○ |
| Example 12 | **72** | **0** | **0** | **8** | **0** | **0** | **0** | **19** | 1 | ○ | ○ | ○ |
| Example 13 | **72** | **0** | **0** | **0** | **8** | **0** | **0** | **19** | 1 | ○ | ○ | ○ |
| Example 14 | **72** | **0** | **0** | **0** | **0** | **8** | **0** | **19** | 1 | ○ | ○ | ○ |
| Example 15 | **65** | **5** | **0** | **10** | **0** | **0** | **0** | **19** | 1 | ○ | ○ | ○ |
| Example 16 | **65** | **5** | **0** | **0** | **10** | **0** | **0** | **19** | 1 | ○ | ○ | ○ |
| Example 17 | **65** | **5** | **0** | **0** | **0** | **10** | **0** | **19** | 1 | ○ | ○ | ○ |
| Example 18 | **60** | **19** | **0** | **0** | **10** | **0** | **0** | **19** | 1 | ○ | ○ | ○ |

### [Example 19]

### Constitution of primer composition:

Sixty mass% pure water (component A), 10 mass% ethylene glycol (component B), solvent (component C') in the form of 10 mass% glycerol (Gly) with a boiling point of 290°C, 19 mass% of water-dispersible polyurethane resin (component D), and 1.0 mass% of silicon surfactant (component E).

### Evaluation results:

Cracks were visible, interference fringes and sagging were prominent, and whitening was determined.

### [Example 20]

### Constitution of primer composition:

Fifty mass% pure water (component A), 20 mass% ethylene glycol (component B), solvent (component C) in the form of 10 mass% NMP with a boiling point of 202°C, 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 21]

### Constitution of primer composition:

Sixty mass% pure water (component A), 20 mass% ethylene glycol (component B), 0 mass% solvent (component C), 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 22]

### Constitution of primer composition:

Sixty mass% pure water (component A), 0 mass% ethylene glycol (component B), solvent (component C') in the form of 20 mass% Gly with a boiling point of 290°C, 19 mass% of water-dispersible polyurethane resin (component D), and 1.0 mass% of silicon surfactant (component E).

### Evaluation results:

Cracks were visible, interference fringes and sagging were prominent, and whitening was determined.

### [Example 23]

### Constitution of primer composition:

Sixty mass% pure water (component A), 10 mass% ethylene glycol (component B), solvent (component C') in the form of 10 mass% dipproylene glycol methyl ether (DPM) with a boiling point of 190°C, 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 24]

### Constitution of primer composition:

Fifty mass% pure water (component A), 10 mass% ethylene glycol (component B), solvent (component C') in the form of 20 mass% DPM with a boiling point of 190°C, 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 25]

### Constitution of primer composition:

Sixty mass% pure water (component A), 5 mass% ethylene glycol (component B), solvent (component C') in the form of 10 mass% DPM with a boiling point of 190°C, 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 26]

### Constitution of primer composition:

Fifty-five mass% pure water (component A), 5 mass% ethylene glycol (component B), solvent (component C') in the form of 20 mass% DPM with a boiling point of 190°C, 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 27]

### Constitution of primer composition:

Seventy mass% pure water (component A), 0 mass% ethylene glycol (component B), solvent (component C') in the form of 10 mass% DPM with a boiling point of 190°C, 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 28]

### Constitution of primer composition:

Sixty mass% pure water (component A), 0 mass% ethylene glycol (component B), solvent (component C') in the form of 20 mass% DPM with a boiling point of 190°C, 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 29]

### Constitution of primer composition:

Fifty-one mass% pure water (component A), 19 mass% ethylene glycol (component B), solvent (component C') in the form of 10 mass% DPM with a boiling point of 190°C, 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 30]

### Constitution of primer composition:

Forty-one mass% pure water (component A), 19 mass% ethylene glycol (component B), solvent (component C') in the form of 20 mass% DPM with a boiling point of 190°C, 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 31]

### Constitution of primer composition:

Sixty-two mass% pure water (component A), 10 mass% ethylene glycol (component B), solvent (component C') in the form of 8 mass% DPM with a boiling point of 190°C, 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 32]

### Constitution of primer composition:

Forty-five mass% pure water (component A), 10 mass% ethylene glycol (component B), solvent (component C') in the form of 25 mass% DPM with a boiling point of 190°C, 19 mass% of water-dispersible polyurethane resin (component D), and 1.0 mass% of silicon surfactant (component E).

### Evaluation results:

Cracks were visible, no interference fringes or sagging were found, and no whitening was determined.

### [Example 33]

### Constitution of primer composition:

Fifty-five mass% pure water (component A), 0 mass% ethylene glycol (component B), solvent (component C') in the form of 25 mass% Gly with a boiling point of 290°C, 19 mass% of water-dispersible polyurethane resin (component D), and 1.0 mass% of silicon surfactant (component E).

### Evaluation results:

Cracks were visible, interference fringes and sagging were prominent, and whitening was determined.

### [Example 34]

### Constitution of primer composition:

Fifty mass% pure water (component A), 0 mass% ethylene glycol (component B), solvent (component C) in the form of 30 mass% NMP with a boiling point of 202°C, 19 mass% of water-dispersible polyurethane resin (component D), and 1.0 mass% of silicon surfactant (component E).

### Evaluation results:

Interference fringes and sagging were prominent. No cracks or whitening was determined.

### [Example 35]

### Constitution of primer composition:

Fifty mass% pure water (component A), 0 mass% ethylene glycol (component B), solvent (component C) in the form of 30 mass% of 2PY with a boiling point of 250°C, 19 mass% of water-dispersible polyurethane resin (component D), and 1.0 mass% of silicon surfactant (component E).

### Evaluation results:

Interference fringes and sagging were prominent. No cracks or whitening was determined.

### [Example 36]

### Constitution of primer composition:

Fifty mass% pure water (component A), 0 mass% ethylene glycol (component B), solvent (component C) in the form of 30 mass% TriEG with a boiling point of 288°C, 19 mass% of water-dispersible polyurethane resin (component D), and 1.0 mass% of silicon surfactant (component E).

### Evaluation results:

Interference fringes and sagging were prominent. No cracks or whitening was determined.

### [Example 37]

### Constitution of primer composition:

Fifty mass% pure water (component A), 0 mass% ethylene glycol (component B), solvent (component C') in the form of 30 mass% Gly with a boiling point of 290°C, 19 mass% of water-dispersible polyurethane resin (component D), and 1.0 mass% of silicon surfactant (component E).

### Evaluation results:

Cracks were visible, interference fringes and sagging were prominent, and whitening was determined.

### [Example 38]

### Constitution of primer composition:

Fifty-four mass% pure water (component A), 0 mass% ethylene glycol (component B), solvent (component C) in the form of 26 mass% NMP with a boiling point of 202°C, 19 mass% of water-dispersible polyurethane resin (component D), and 1.0 mass% of silicon surfactant (component E).

### Evaluation results:

Interference fringes and sagging were prominent. No cracks or whitening was determined.

### [Example 39]

### Constitution of primer composition:

Fifty-four mass% pure water (component A), 0 mass% ethylene glycol (component B), solvent (component C) in the form of 26 mass% 2PY with a boiling point of 250°C, 19 mass% of water-dispersible polyurethane resin (component D), and 1.0 mass% of silicon surfactant (component E).

### Evaluation results:

Interference fringes and sagging were prominent. No cracks or whitening was determined.

### [Example 40]

### Constitution of primer composition:

Fifty-four mass% pure water (component A), 0 mass% ethylene glycol (component B), solvent (component C) in the form of 26 mass% TriEG with a boiling point of 288°C, 19 mass% of water-dispersible polyurethane resin (component D), and 1.0 mass% of silicon surfactant (component E).

### Evaluation results:

Interference fringes and sagging were prominent. No cracks or whitening was determined.

### [Example 41]

### Constitution of primer composition:

Seventy-two mass% pure water (component A), 0 mass% ethylene glycol (component B), solvent (component C') in the form of 8 mass% Gly with a boiling point of 290°C, 19 mass% of water-dispersible polyurethane resin (component D), and 1.0 mass% of silicon surfactant (component E).

### Evaluation results:

Cracks were visible, interference fringes and sagging were prominent, and whitening was determined.

### [Example 42]

### Constitution of primer composition:

Seventy-three mass% pure water (component A), 0 mass% ethylene glycol (component B), solvent (component C) in the form of 7 mass% NMP with a boiling point of 202°C, 19 mass% of water-dispersible polyurethane resin (component D), and 1.0 mass% of silicon surfactant (component E).

### Evaluation results:

Cracks were visible, interference fringes and sagging were prominent. No whitening was observed.

### [Example 43]

### Constitution of primer composition:

Seventy-three mass% pure water (component A), 0 mass% ethylene glycol (component B), solvent (component C) in the form of 7 mass% 2PY with a boiling point of 250°C, 19 mass% of water-dispersible polyurethane resin (component D), and 1.0 mass% of silicon surfactant (component E).

### Evaluation results:

Cracks were visible, interference fringes and sagging were prominent. No whitening was observed.

### [Example 44]

### Constitution of primer composition:

Seventy-three mass% pure water (component A), 0 mass% ethylene glycol (component B), solvent (component C) in the form of 7 mass% TriEG with a boiling point of 288°C, 19 mass% of water-dispersible polyurethane resin (component D), and 1.0 mass% of silicon surfactant (component E).

### Evaluation results:

Cracks were visible, interference fringes and sagging were prominent. No whitening was determined.

### [Example 45]

### Constitution of primer composition:

Seventy-three mass% pure water (component A), 0 mass% ethylene glycol (component B), solvent (component C') in the form of 7 mass% Gly with a boiling point of 290°C, 19 mass% of water-dispersible polyurethane resin (component D), and 1.0 mass% of silicon surfactant (component E).

### Evaluation results:

Cracks were visible, interference fringes and sagging were prominent, and whitening was determined.

### [Example 46]

### Constitution of primer composition:

Sixty-six mass% pure water (component A), 4 mass% ethylene glycol (component B), solvent (component C) in the form of 10 mass% NMP with a boiling point of 202°C, 19 mass% of water-dispersible polyurethane resin (component D), and 1.0 mass% of silicon surfactant (component E).

### Evaluation results:

Interference fringes and sagging were prominent. No cracks or whitening was determined.

### [Example 47]

### Constitution of primer composition:

Sixty-six mass% pure water (component A), 4 mass% ethylene glycol (component B), solvent (component C) in the form of 10 mass% 2PY with a boiling point of 250°C, 19 mass% of water-dispersible polyurethane resin (component D), and 1.0 mass% of silicon surfactant (component E).

### Evaluation results:

Interference fringes and sagging were prominent. No cracks or whitening was determined.

### [Example 48]

### Constitution of primer composition:

Sixty-six mass% pure water (component A), 4 mass% ethylene glycol (component B), solvent (component C') in the form of 10 mass% TriEG with a boiling point of 288°C, 19 mass% of water-dispersible polyurethane resin (component D), and 1.0 mass% of silicon surfactant (component E).

### Evaluation results:

Interference fringes and sagging were prominent. No cracks or whitening was determined.

### [Example 49]

### Constitution of primer composition:

Sixty mass% pure water (component A), 20 mass% ethylene glycol (component B), solvent (component C) in the form of 10 mass% 2PY with a boiling point of 250°C, 19 mass% of water-dispersible polyurethane resin (component D), and 1.0 mass% of silicon surfactant (component E).

### Evaluation results:

Cracks were visible. No interference fringes or sagging were found. No whitening was determined.

### [Example 50]

### Constitution of primer composition:

Fifty mass% pure water (component A), 20 mass% ethylene glycol (component B), solvent (component C) in the form of 10 mass% TriEG with a boiling point of 288°C, 19 mass% of water-dispersible polyurethane resin (component D), and 1.0 mass% of silicon surfactant (component E).

### Evaluation results:

Cracks were visible. No interference fringes or sagging were found. No whitening was determined.

The constitution and evaluation results of the primer compositions of Examples 19 to 50 above are given in Table 2.

Results identical to those of the above examples were obtained both when an ethylene carbonate plastic lens substrate 2 with a refractive index of equal to or lower than 1.59 was coated, and when a thiourethane plastic lens substrate 2 with a refractive index of equal to or higher than 1.59 was coated.

**[Table 2]**

| | Component | Component | Component | | | | | Component | Component | Evaluation | | |
|---|---|---|---|---|---|---|---|---|---|---|---|---|
| | **A** | **B** | **C'** | **C** | | | **C'** | **D** | **E** | | | |
| | Pure water | **EG (b.p 198°C)** | **DPM (b.p 190°C)** | **NMP (b.p 202°C)** | **2PY (b.p 250°C)** | **TriEG (b.p 288°C)** | **Gly (b.p 290°C)** | Polyurethane | Surfactant | Cracking | Interference fringes and sagging | Whitening |
| Example 19 | **60** | **10** | **0** | **0** | **0** | **0** | **10** | **19** | **1** | **×** | **×** | **×** |
| Example 20 | **50** | **20** | **0** | **10** | **0** | **0** | **0** | **19** | **1** | **×** | **○** | **○** |
| Example 21 | **60** | **20** | **0** | **0** | **0** | **0** | **0** | **19** | **1** | **×** | **○** | **○** |
| Example 22 | **60** | **0** | **0** | **0** | **0** | **0** | **20** | **19** | **1** | **×** | **×** | **×** |
| Example 23 | **60** | **10** | **10** | **0** | **0** | **0** | **0** | **19** | **1** | **×** | **○** | **○** |
| Example 24 | **50** | **10** | **20** | **0** | **0** | **0** | **0** | **19** | **1** | **×** | **○** | **○** |
| Example 25 | **65** | **5** | **10** | **0** | **0** | **0** | **0** | **19** | **1** | **×** | **○** | **○** |
| Example 26 | **55** | **5** | **20** | **0** | **0** | **0** | **0** | **19** | **1** | **×** | **○** | **○** |
| Example 27 | **70** | **0** | **10** | **0** | **0** | **0** | **0** | **19** | **1** | **×** | **○** | **○** |
| Example 28 | **60** | **0** | **20** | **0** | **0** | **0** | **0** | **19** | **1** | **×** | **○** | **○** |
| Example 29 | **51** | **19** | **10** | **0** | **0** | **0** | **0** | **19** | **1** | **×** | **○** | **○** |
| Example 30 | **41** | **19** | **20** | **0** | **0** | **0** | **0** | **19** | **1** | **×** | **○** | **○** |
| Example 31 | **62** | **10** | **8** | **0** | **0** | **0** | **0** | **19** | **1** | **×** | **○** | **○** |
| Example 32 | **45** | **10** | **25** | **0** | **0** | **0** | **0** | **19** | **1** | **×** | **○** | **○** |
| Example 33 | **55** | **0** | **0** | **0** | **0** | **0** | **25** | **19** | **1** | **×** | **×** | **×** |
| Example 34 | **50** | **0** | **0** | **30** | **0** | **0** | **0** | **19** | **1** | **○** | **×** | **○** |
| Example 35 | **50** | **0** | **0** | **0** | **30** | **0** | **0** | **19** | **1** | **○** | **×** | **○** |
| Example 36 | **50** | **0** | **0** | **0** | **0** | **30** | **0** | **19** | **1** | **○** | **×** | **○** |
| Example 37 | **50** | **0** | **0** | **0** | **0** | **0** | **30** | **19** | **1** | **×** | **×** | **×** |
| Example 38 | **54** | **0** | **0** | **28** | **0** | **0** | **0** | **19** | **1** | **○** | **×** | **○** |
| Example 39 | **54** | **0** | **0** | **0** | **26** | **0** | **0** | **19** | **1** | **○** | **×** | **○** |
| Example 40 | **54** | **0** | **0** | **0** | **0** | **26** | **0** | **19** | **1** | **○** | **×** | **○** |
| Example 41 | **72** | **0** | **0** | **0** | **0** | **0** | **8** | **19** | **1** | **×** | **×** | **×** |
| Example 42 | **73** | **0** | **0** | **7** | **0** | **0** | **0** | **19** | **1** | **×** | **×** | **○** |
| Example 43 | **73** | **0** | **0** | **0** | **7** | **0** | **0** | **19** | **1** | **×** | **×** | **○** |
| Example 44 | **73** | **0** | **0** | **0** | **0** | **7** | **0** | **19** | **1** | **×** | **×** | **○** |
| Example 45 | **73** | **0** | **0** | **0** | **0** | **0** | **7** | **19** | **1** | **×** | **×** | **×** |
| Example 46 | **66** | **4** | **0** | **10** | **0** | **0** | **0** | **19** | **1** | **○** | **×** | **○** |
| Example 47 | **66** | **4** | **0** | **0** | **10** | **0** | **0** | **19** | **1** | **○** | **×** | **○** |
| Example 48 | **66** | **4** | **0** | **0** | **0** | **10** | **0** | **19** | **1** | **○** | **×** | **○** |
| Example 49 | **60** | **20** | **0** | **0** | **10** | **0** | **0** | **19** | **1** | **×** | **○** | **○** |
| Example 50 | **50** | **20** | **0** | **0** | **0** | **10** | **0** | **19** | **1** | **×** | **○** | **○** |

The primer composition relating to the present implementation mode was found to exhibit the following effects.
(1) By constituting a primer constitution by incorporating pure water (component A), a solvent having a boiling point of equal to or higher than 200°C but lower than 290°C (component C), a water-dispersible polyurethane resin (component D), and a silicon surfactant (component E), it is possible to inhibit the generation of cracks in the primer layer 3 that is coated on plastic lens substrate 2 as well as the generation of interference fringes, sagging, and whitening.

In Examples 2, 4 to 6, 9, 12, and 15 in which a primer composition containing a solvent (component C) in the form of NMP with a boiling point of 202°C was employed; in Examples 1, 7, 10, 13, and 18 in which a primer composition containing a solvent (component C) in the form of 2PY having a boiling point of 250°C was employed; and in Examples 3, 8, 11, 14, and 17, in which a solvent (component C) in the form of TriEG having a boiling point of 288°C was employed, no cracking, interference fringes, sagging, or whitening was observed.

By contrast, in Example 21, in which a primer composition containing no solvent (component C) at all was employed, and in Examples 23 to 32 and 46 to 50, in which a primer composition containing a solvent in the form of DPM (component C') having a boiling point of 190°C was employed, cracks were generated in primer layer 3. When the boiling point of the solvent was lower than 200°C, the coating dried rapidly. As a result, the coating contracted rapidly, which was thought to generate cracks.

In Examples 19, 22, 33, 37, 41, and 45, in which a primer composition containing Gly with a boiling point of 290°C was employed, not only were cracks generated, but interference fringes, sagging, and whitening occurred as well. Gly has a considerable moisture-retaining property. Thus, when dried while still holding moisture, optical scattering causes a whitening phenomenon. When Gly is contained in the primer composition, primer layer 3 had the considerable moisture-retaining property, but some level of drying is thought to generate cracks through local film contraction. Accordingly, keeping the boiling point of the solvent (component C) to within a range of equal to or higher than 200°C but lower than 290°C can inhibit cracks and interference fringes.
(2) Incorporating ethylene glycol (component B) into the primer composition can shorten the drying time when going from a coating to a dry film, thereby enhancing productivity.
(3) Keeping the mass of the ethylene glycol (component B) to less than twice the mass of the solvent (component C) can inhibit the generation of cracks in the coating.

The ratio of component B to component C (B/C) in the primer composition was 0.5-fold in examples 15 to 17, 1.0-fold in Examples 1 to 3, 1.5-fold in Example 4, and 1.9-fold in Examples 5 and 18. In these examples, no cracks, interference fringes, sagging, or whitening was observed in primer layer 3.

By contrast, in Examples 20, 49, and 50, in which primer compositions in which the ratio (B/C) was 2.0-fold were employed, although no interference fringes, sagging, or whitening was observed, cracks were found. When the ratio (B/C) is equal to or more than 2.0-fold, the primer composition tends not to dry. This causes the nozzles of the ink-jet coating device to tend not to clog. Accordingly, the primer composition in the ink-jet coating device is stably discharged, forming primer layer 3. However, time is required for the film that has been coated to dry, which is thought to produce uneven drying and thus generate cracks.
(4) Keeping the ratio of the mass of ethylene glycol (component B) to the mass of the solvent (component C) to equal to or higher than 0.5-fold can inhibit the generation of interference fringes and/or sagging in primer layer 3.

In Examples 1 to 5 and 15 to 18, in which the ratio of component B to component C (B/C) in the primer composition was equal to or higher than 0.5-fold, no cracks, interference fringes, sagging, or whitening was observed in primer layer 3.

By contrast, in Examples 46 to 48, in which a primer composition in which the above ratio was 0.4-fold was employed, although no cracking or whitening was observed, interference fringes and sagging were found. In other words, when the mass of the ethylene glycol (component B) was less than 0.5-fold the mass of the solvent (component C) with a boiling point of equal to or higher than 200°C but lower than 290°C, the drying time of the primer layer 3 that was formed increased and interference fringes and/or sagging were produced.

When a primer composition that contained no ethylene glycol (component B) - that is, in which the ratio (B/C) was 0 - was employed, primer layer 3 was formed as a stable discharge by the ink-jet coating device. However, the effect of the solvent (component C) was considerable, drying slowed, and productivity deteriorated. When the ratio (B/C) was 0.4-fold, drying was faster than when the ratio (B/C) was 0, primer composition dried on the nozzle openings, this was contained in the primer composition that was discharged, and the primer layer 3 that was formed became uneven, producing an interference fringe.
(5) By incorporating pure water (component A), a solvent having a boiling point of equal to or higher than 200°C but lower than 290°C (component C), a water-dispersible polyurethane resin (component D), and a silicon surfactant (component E) and keeping the concentration of solvent (component C) relative to the total composition to equal to or less than 25 mass%, it is possible to inhibit the generation of interference fringes and/or sagging in the coating. When the concentration of solvent (component C) is equal to or less than 25 mass%, even when the primer composition don't contain ethylene glycol (component B), the same effect can be achieved as when ethylene glycol (component B) is present.

That is, in Examples 12 to 14, in which the concentration of solvent (component C) having a boiling point of equal to or higher than 200°C but lower than 290°C in the primer composition was 8 mass%, in Examples 6 to 8, in which the above concentration was 20 mass%, and in Examples 9 to 11, in which the above concentration was 25 mass%, no cracks, interference fringes, sagging, or whitening was observed in primer layer 3. By contrast, in Examples 38 to 40, in which the concentration of solvent (component C) having a boiling point of equal to or higher than 200°C but lower than 290°C in the primer composition was 26 mass%, and in Examples 34 to 36, in which the above concentration was 30 mass%, although no cracking or whitening was observed, interference fringes and sagging were generated.

When ethylene glycol (component B) was added to the various examples in which the concentration of solvent (component C) was equal to or more than 0.8 mass% but equal to or less than 25 mass% and tests were conducted, the same results as for a solvent (component C) concentration of 10 mass% were obtained. That is, when the ratio (B/C) was equal to or more than 0.5-fold but less than twice, no cracking, interference fringes, sagging, or whitening was observed. When less than 0.5-fold, interference fringes and sagging were generated. When equal to or more than twice, cracks were generated. For example, in test cases where the solvent (component C) was 8 mass% and ethylene glycol (component B) was varied at 0.32 mass%, 0.4 mass%, 0.8 mass%, 1.52 mass%, and 1.6 mass%, no cracking, interference fringes, sagging, or whitening was observed at any of 0.4 mass%, 0.8 mass%, or 1.52 mass%. Cracks were generated at 0.32 mass%, and interference fringes and sagging were generated at 1.6 mass%. The same results were achieved for the various types of solvent (component C) of TriEG, 2PY, and NMP. The same results were obtained when the type of plastic lens substrate 2 was varied in the same manner as in the above examples.
(6) By incorporating pure water (component A), a solvent having a boiling point of equal to or higher than 200°C but lower than 290°C (component C), a water-dispersible polyurethane resin (component D), and a silicon surfactant (component E) and keeping the concentration of solvent (component C) relative to the total composition to equal to or more than 8 mass%, it is possible to inhibit the generation of cracks in the coating. When the concentration of solvent (component C) is equal to or less than 25 mass%, even when the primer composition don't contain ethylene glycol (component B), the same effect can be achieved as when ethylene glycol (component B) is present.

That is, as set forth above, in Examples 6 to 8, 9 to 11, and 12 to 14, in which a primer composition in which the concentration of solvent (component C) having a boiling point of equal to or higher than 200°C but lower than 290°C to the primer composition as a whole was equal to or more than 8 mass%, no cracking, interference fringes, sagging, or whitening was observed in primer layer 3. By contrast, in Examples 42 to 44, in which the concentration of solvent (component C) having a boiling point of equal to or higher than 200°C but lower than 290°C was 7 mass% relative to the primer composition as a whole, not just interference fringes and sagging were generated, but cracking and whitening, as well.
(7) Coating the primer composition constituted as set forth above on plastic lens substrate 2 by the ink-jet method can form a uniform primer layer 3 and can inhibit cracks and/or interference fringes. The solvent (component C) in the present implementation mode has a boiling point of equal to or higher than 200°C. When a plastic lens substrate 2 was dipped in a coating liquid containing a solvent having a boiling point of equal to or higher than 200°C, the primer layer is rendered uneven because the solvent tends not to dry. That is, interference fringes and sagging result.

The present invention is not limited to the implementation mode given above, and can be modified to the extent that the object of the present invention can be achieved.

For example, in the above implementation mode, a plastic lens substrate 2 of an eyeglass lens 1 was adopted as the object on which primer layer 3 was formed. However, optical articles other than eyeglass lenses 1 can also be employed in the present invention.

### Explanation of symbols

1···Eyeglass lens, 2···Plastic lens substrate, 3···Primer layer, 121···head

## Claims

1. A method of manufacturing an eyeglass lens comprising a coating layer on a lens substrate, which comprises forming the coating layer by coating a coating liquid by an ink-jet method on the lens substrate, with the coating liquid which is a water-based coating liquid comprising a solvent having a boiling point of equal to or higher than 200°C but lower than 290°C, a water-dispersible polyurethane resin, and a surfactant.

2. The method of manufacturing an eyeglass lens according to claim 1, wherein the coating liquid further comprises ethylene glycol.

3. The method of manufacturing an eyeglass lens according to claim 2, wherein the coating liquid comprises ethylene glycol in a quantity of equal to or more than 0.5-fold but less than twice the mass of the solvent having a boiling point of equal to or higher than 200°C but lower than 290°C.

4. The method of manufacturing an eyeglass lens according to claim 1, wherein the coating liquid comprises the solvent having a boiling point of equal to or higher than 200°C but lower than 290°C in a concentration of equal to or more than 8 mass% but equal to or less than 25 mass% relative to the total quantity of the coating liquid.

5. An eyeglass lens obtained by the manufacturing method according to any of claims 1 to 4.
